# EUROPÄISCHE PATENTSCHRIFT

(11) **EP 0 731 237 B1**
(45) Veröffentlichungstag und Bekanntmachung des Hinweises auf die Patenterteilung: **14.06.2000**
(21) Anmeldenummer: 96103768.6
(22) Anmeldetag: 11.03.1996
(51) Int. Cl.: E04F 15/02, E04C 2/24, B32B 5/22, B29C 39/18, B28B 11/04, B29C 67/24, B29C 70/00

(54) **Mit einer wasserabweisenden Vorsatzschicht belegtes Bauelement, insbesondere Fliesenelement**
Structural element covered by a water-repellent front layer, especially tiling element
Elément de construction couvert par une couche avant hydrophobe, notamment élément de carrelage

(30) Priorität: 09.03.1995 DE 19508318
(43) Veröffentlichungstag der Anmeldung: 11.09.1996
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut, Dr. Dipl.-Phys.

(56) Entgegenhaltungen:
- BE-A- 779 339
- DE-A- 2 804 034
- DE-A- 4 036 966
- DE-U- 1 727 570
- DE-U- 9 005 780
- DE-U- 9 313 351
- FR-A- 2 633 563
- FR-A- 2 700 569
- GB-A- 1 170 363

## Beschreibung

Die Erfindung betrifft ein mit einer wasserabweisenden Vorsatzschicht belegtes Bauelement, insbesondere Fliesenelment, bei dem wenigstens eine Vorsatzschicht auf einer Sichtseite eines Träger-Kern-Körpers angeordnet ist und ein Verfahren zu seiner Herstellung.

Ein mit einer wasserabweisenden Vorsatzschicht belegtes Bauelement der eingangs genannten Art ist aus der DE-U-1 727 570 bekannt. Auf einem Ton- oder Betonwerkstein ist die Vorderschicht aus einem Gemisch von Steinmehl, Sand oder körnigem Material mit einem Kunstharz als Bindemittel angeordnet. Durch die Verwendung von Kunstharz können die Spannungen zwischen dem Werkstein und der Vorsatzschicht abgebaut werden, aber durch die Zumischung des Gemisches aus Steinmehl, Sand oder körnigem Steinmaterial erhält der Betonwerkstein eine Vorsatzschicht, in der körnige Steine oder Sand sichtbar im Kunstharz eingebettet sind. Für die Auslegung von Wänden ist außerdem das Werksteinmaterial zu schwer und verfügt darüberhinaus über unzureichende Isoliereigenschaften.

Ein Fliesenelement und ein Verfahren zu seiner Herstellung sind aus "Überglasierte Kanten", FLIESEN UND PLATTEN, Heft 4, 1991, Seite 22-24, bekannt. Danach werden Steingutfliesen mit einer pigmentierten Glasur versehen. Hierzu werden die Steingutfliesen in einem Ofen gebrannt. Moderne Techniken in Flachbrandöfen lassen allerdings die Produktion der früher üblichen weichen Abdeckungen nicht mehr zu. Die Fliesenindustrie bietet scharf überlasierte Kanten an, die teilsweise schlecht oder fehlerhaft glasurüberzogen gebrannt wurden. Dem verarbeitenden Fliesenleger verbleibt nur noch die Hoffnung, daß unter den vielen Kartons auf der Baustelle eine ausreichende Anzahl einwandfreier Abdeckfliesen zu finden sein werden. Oft, allzu oft hofft er vergeblich. Die von den Fliesenlegern gewünschte Optimallösung hat für die Industrie jedoch erhebliche Nachteile. Technisch ist dieses Problem ohne Verteuerung der Ware kaum in den Griff zu bekommen. Der Fliesenhersteller müßte zur alten Verfahrenstechnik des Kassettenbrandes im Bekottura-Verfahren zurückkehren, was sich aus Kosten und Wettbewerbsgründen verbietet. Würden die Fliesen beispielsweise werksseitig an allen vier Kantendecken vollflächig glasiert, fließt beim Brennvorgang in modernen Rollöfen die Glasur teilweise seitlich ab und die Fliesen bleiben an den Rollen des Ofens kleben. Als technische Kompromißlösung bietet sich an, die seitliche Glasur der Kanten bis auf einen unglasierten Streifen von etwa 2 mm herunterzuziehen. Damit würde das Festkleben der Fliesen verhindert werden können. Wenn alle Kanten bei dekorierten Quadraten mindestens an drei Seiten und bei dekorierten Rechtecken sogar alle vier Seiten überlasiert erhalten bleiben sollen, würde dies jedoch nicht nur erhebliche Mehrkosten bei der Produktion verursachen, die zumindest teilweise die Aufgabe des Kostenreduzierungseffekts der modernen Brenntechnologie, Sortieranlagen usw. bringen, sondern auch technisch bei der Verlegung des Materials eine deutliche Reduzierung der Flankenhaftung des Fugmaterials, also eine Erschwernis bei der Verarbeitung zur Folge haben.

Aus der DE-A-28 04 034 ist eine keramische Platte bekannt, die aus einer Isolationsschicht aus reinem gebrannten Tonmaterial mit mikroskopisch kleinen Poren besteht und sowohl auf einer als auch auf beiden Sichtseiten mit einer Glasur versehen ist.

Nachteilig ist, daß die bereits beschriebenen Schwierigkeiten bei der Herstellung überglasierter Kanten nicht behoben werden und bei der Glasierung der zweiten Sichtfläche zusätzliche Überglasierungen bereits glasierter Seitenflächen zu befürchten sind.

Letztendlich ist aus der DE-A-4 036 966 eine Boden- und Wandplatte sowie ein Verfahren zu deren Herstellung bekannt. Die Platte besteht aus zwei Schichten. Eine Tritt- bzw. Oberfläche bildende Oberschicht und eine im Gewicht leichte Unterschicht. Die Oberschicht wird allerdings nur aus einem Gemisch aus Ziegelschrot, Ziegelmehl oder Quarzmehl je nach gewünschter Oberfläche und einem Weißzement als Binder hergestellt. Die Unterschicht ist 14 bis 15 mm dick und besteht aus einer Gußmischung aus 60% Blähbeton, 8% Ziegel- oder Quarzmehl, 25% Weißzement sowie 7% Zuschlagstoffe und Wasser. Die Unterschicht kann auch aus Harzschaumstoff sein. Die Herstellung der Platte erfolgt lediglich so, daß in eine Form nacheinander die beiden Schichten eingegossen oder eingelegt werden.

Demnach stellt sich die Aufgabe, ein mit einer wasserabweisenden Vorsatzschicht belegtes Bauelement, insbesondere Fliesenelement der eingangs genannten Art so weiterzuentwickeln, daß die Anforderungen an Qualität und Aussehen erfüllt werden, das Bauelement sich leicht verarbeiten läßt und hohe Isoliereigenschaften aufweist und hierfür ein Verfahren zu seiner Herstellung anzugeben.

Erfindungsgemäß wird die Aufgabe bei einem Bauelement dadurch gelöst, daß der Träger-Kern-Körper als Leichtstoffkern aus Kunststoffschaum oder Gipsmasse, wie es aus Gipskartonplatten bekannt ist, ausgebildet ist, und daß die Vorsatzschicht eine bearbeitete Quarz-Epoxydharzschicht ist, die zu 10 bis 70 Gew. % aus Epoxydharz und zu 30 bis 90 Gew. % aus einem Quarz mit einer Korngröße von 0,3 bis 1,2 mm besteht, wobei die Summe der Epoxydharz- und Quarz-Prozentangaben 100% ergeben muß.

Die mit der Erfindung erzielten Vorteile bestehen insbesondere darin, daß das Bauelement durch den Einsatz eines Leichtstoffkerns als Träger-Kern-Körper wärmeisolierende Eigenschaften hat. Die auf dem Leichtstoffkern aufgebrachte und speziell ausgebildete Quarz-Epoxydharzschicht verleiht dem Bauelement zusammen mit dem Leichtstoffkern starke stabile Eigenschaften. Die aufgebrachte Quarz-Epoxydharzschicht stellt im Vergleich zu einer herkömmlichen Fliese das eigentliche Verkleidungselement dar. Dadurch, daß es durchgängig aus dem gleichen Werkstoff hergestellt ist, entstehen an den schmalen Seitenkanten keine Farbunterschiede. Darüberhinaus läßt sich die Quarz-Epoxydharzschicht leichter schneiden und bearbeiten als eine harte Glasurschicht einer Fliese. Dadurch, daß die Quarz-Epoxydharzshicht auf den Leichtstoffkern aufgebracht wird, lassen sich Abmessungen realisieren, die wesentlich größer als eine herkömmliche Wand- bzw. Bodenfliese ist. Mit einem solchen Bauelement lassen sich Trennwände zum Beispiel in Toilettenkabinen errichten bzw. Wände in räpresentativen Bade- und Durschräumen verkleiden. Und zwar ist es möglich, die einzelnen Bauelemente ähnlich wie herkömmliche Fliesen untereinander durch Fugen zu verbinden. Die Kunst-Epoxydharzschicht erlaubt es in der Kunstharztechnik übliche Klebeverfahren zum Aneinander- und Übereinanderverlegen einzelner Bauplatten anzuwenden, so daß zum Beispiel bei einer Wandverkleidung nur eine durchgehende Außen schicht sichtbar wird. Von Vorteil ist darüberhinaus, daß sich durch die beiden Einsatzmaterialien Quarz-Epoxydharz und Leichtstoff unterschiedlichste Konfigurationen realisieren lassen. Eine solche Variantenvielfalt ist bei herkömmlichen Fliesen nur mit hohen Aufwendungen erreichbar.

Möglich ist es, daß der einen Quarz-Epoxydharzschicht gegenüberliegend eine ausgehärtete Mörtelschicht mit einem eingebetteten Armierungsgewebe angeordnet ist. Hierdurch entsteht ein Bauelement, das aus einer an sich bekannten Bauplatte besteht, die auf der freien Seite mit der Quarz-Epoxydharzschicht versehen ist. Möglich ist darüber hinaus, daß eine zweiseitig beschichtete Bauplatte mit einer Mörtelschicht mit eingebettetem Armierungsgewebe wenigstens auf einer Seite mit einer Quarz-Epoxydharzschicht versehen ist.

Möglich ist es weiterhin, der Quarz-Epoxydharzschicht gegenüberliegend eine weitere Quarz-Epoxydharzschicht auf den Leichtstoffkern aufzubringen. Zwischen der Quarz-Epoxydharzschicht und dem Leichtstoffkörper kann ein Armierungsgewebe angeordnet sein.

Vorteilhaft ist es, wenn der Quarz ein kolorierter Quarz ist. Der Quarz-Color-Sand kann in zwei Korngrößen eingesetzt werden:
I. 0,3 - 1,2 mm grob
   und
II. 0,3 - 0,9 mm fein.

Die Höhe der Quarz-Epoxydharzschicht kann dabei 0,3 bis 5 mm betragen. Die Kunststoffbahn kann in einer Höhe zwischen 5 und 500 mm, vorzugsweise 180 mm ausgebildet werden.

Das unterhalb der Quarz-Epoxydharzschicht liegende Armierungsgewebe kann ein Glasfaser- oder Metallgewebe oder dergleichen sein.

Vorteilhaft ist es, wenn die Quarz-Epoxydharzschicht eine Dekorfläche hat, die eben oder reliefartig und oberflächenbehandelt, z.B. geschliffen ist.

Der Leichtstoffkern kann unterschiedlichste Konfigurationen aufweisen. Er kann flächenförmig, reliefförmig, parabolförmig, zylinderförmig, hohlkörperförmig, z.B. rohrförmig, kastenförmig, winkelförmig sein. Auch Mischkonfigurationen sind denkbar.

Auf den freien Seitenflächen des Leichtstoffkerns können Metall-, Kunststoff- oder Holzschichten aufgebracht sein. Es können eine, zwei bis hin zu allen vier freien Seitenflächen beschichtet werden.

Die Quarz-Epoxydharzschicht kann einen Fliesenüberstand auf einer der Seiten und der Leichtstoffkern auf der gegenüberliegenden Außenseite einen Kernüberstand aufweisen. Sie sind dabei vorzugsweise so weit ausgebildet, daß bei einem Nebeneinanderlegen von Kernen die nebeneinander liegenden Quarz-Epoxydharzschichten einen Spalt zwischen sich frei lassen, der einer üblichen Fugenbreite entspricht. Diese Fugenbreite kann z.B. zwischen 1 und 5 mm betragen. Zur Aufnahme von Flächenausdehnungen kann als Fugenmaterial ein plastischer Dehnungsstreifen eingebracht werden, der in Farbe und Aussehen dem Fugenmaterial entspricht.

Vorteilhaft ist es, wenn in die Quarz-Epoxydharzschicht und/oder im Leichtstoffkern Fliesenelementbefestigungselemente, Befestigungs- und/oder Verankerungselemente für Handtuchhalter, Sanitäranlagen, Toilettenartikel, z.B. Zahnputzbecher, Seifenschalen und dergleichen eingebracht sind.

Der Leichtstoffkern kann aus Polytyrolschaum, aus Formglas oder lockerem oder geschrimmtem Recyclingmaterial oder holzbildenen Plattenmaterial bestehen. Denkbar sind auch schichtförmige Kombinationen der einzelnen Kernstoffe. Außerdem können in die speziell ausgebildeten Kerne flächenförmige Blechelemente eingeschlossen sein. Hierbei kann sich ein Blechelement über den gesamten Kern erstrecken. Eingesetzt werden können aber auch mehrere Blechelemente.

Eingesetzt wird zur Lösung der gestellten Aufgabe ein Verfahren zur Herstellung eines mit einer wasserabweisenden Vorsatzschicht belegten plattenförmigen Bauelements, insbesondere Fliesenelement, das aus einem Leichtstoffkern aus Kunsstoffschaum oder Gipsmasse, und aus auf wenigstens einer der Flachseiten des Kerns aufgebrachten Quarz-Epoxydharzschicht besteht, die aus einem aushärtenden, breiartigen Gemisch aus 10 bis 70 Gew.% Epoxydharz und 30 bis 90 Gew.% Quarz mit einer Korngröße von 0,3 bis 1,2 mm sich ausbildet, wobei die Summe der Epoxydharz- und Quarz-Prozentangaben 100% ergeben muß, unter Verwendung folgender Verfahrensschritte:
a) Heranführen einer horizontal liegenden, aus dem Leichtstoffkern gebildeten Bahn, die endlos ist, oder aus einzelnen, auf Stoß hintereinander liegenden Bahnabschnitten besteht;
b) Aufbringen des Quarz-Epoxydharzgemisches in fluidem Zustand aus einer Aufbringvorrichtung auf die zu beschichtende Seite des Kerns (Bahnabschnitt) und Verteilen des Gemisches auf der zu beschichtenden Seite des Kerns (Bahnabschnitt);
c) Abstreifen des über eine festgelegte Schichthöhe überstehenden Quarz-Epoxydharzgemisches mit einem Abstreifer unter Bildung eines Gemischschwalls vor dem Abstreifer;
d) Abfühlen der in dem Gemischschwall enthaltenen Gemischmenge unter Verwendung des abgefühlten Signals als Regelgröße zur Steuerung einer Dosiervorrichtung für die ausströmende Gemischmenge;
e) Trocknen und Aushärten der aufgebrachten Quarz-Epoxydharzschicht;
f) Bearbeiten, d.h. wenigstens Zerschneiden der Quarz-Epoxydharzschicht (3) und gegebenfalls auch der Leichtstoffkernbahn, im Bereich der Stöße bzw. in gewählten Abständen.

Möglich ist es dabei, vor dem Verfahrensschritt b) eine endlose Bahn aus Armierungsgewebe, z.B. ein Glasfasergewebe oder -vlies bzw. aus Aramidgewebe oder Polyestervlies über einem Bahnspeicher in praktisch spannungslosem Zustand unter gleicher Geschwindigkeit wie die Transportgeschwindigkeit der Kernbahn aufzubringen.

Nach dem Trocknen und Aushärten der Schicht auf der einen Flachseite der einseitig fertiggestellte Fliesenelementplatte kann diese gewendet werden und das Verfahren für die andere, bisher unbeschichtete Seite wiederholt werden.

Vorteilhaft ist es, wenn das Gemisch zunächst noch ungleichmäßig oder grob verteilt wird und die Bahn auf dem Bahnabschnitt aufliegend in das ungleichmäßig oder grob verteilte Gemisch eingebettet wird.

Nachstehend wird unter folgenden Begriffen insbesondere folgendes verstanden:
Ein Schaumstoffkern ist eine an sich bekannte Hartschaumplatte. Unter Hartschaumstoffen wird nach DIN 7726, Blatt 1 (Dezember 1966) ein harter Schaumstoff verstanden, der bei relativ hohem Verformungswiderstand geringe elastische Verformbarkeit zeigt. Verwendbar erscheinen sowohl zäh-harte als auch spröd-harte Schaumstoffe. Als Ausgangsstoffe für die Herstellung von Hartschaumstoffen sind bekannt: Polymetacryllymit, Phenol-Formaldehydharze, Harnstoffharze, PVC, Polystyrol, Phenolharze und Polyurethane. Einige Hartschaumstoffe sind auch als leicht-, andere als schwer-entflammbar einzustufen, worauf bei der Verarbeitung geachtet werden muß.

Unter Kunststoffmörtel wird kunstharzvergüteter, hydraulisch abbindender Klebemörtel verstanden, der nach dem Aushärten weitgehend wasserfest sowie witterungs-, alterungs- und frostbeständig ist. Derartige Kunststoffmörtel werden beispielsweise unter dem Warenzeichen HYDROLAN vertrieben.

Quarz (Siliciumdioxyd, "Kieselsäure", SiO₂) ist ein Mineral der Erdkruste, das meist farblos, weiß, glas- oder fettglänzend, undurchsichtig, trübe oder durchsichtig ist. Quarz ist in Wasser, Salzsäure, Schwefelsäure und anderen Mineralsäuren praktisch unlösbar. Pulverisierter Quarz besitzt an seiner Oberfläche saure Gruppen, die man titarieren und zur Fixierung funktioneller Gruppen benutzen kann.

Für das erfindungsgemäße Bauelement wird hauptsächlich gemahlener Quarz eingesetzt, der entsprechend koloriert wird. Hierbei können Farben bzw. Farbteile und dergleichen bei- und untergemischt werden.

Epoxydharze (Etocylinharze, Epoxyharze, Kurzzeichen EP nach DIN 7728 T1, April 1978 sind zu den Duroplasten gehörende Polyadditionsprodukte aus Epoxyden mit Polylen,_Nowolaken, Hexahydrophtalsäure, Hydantion, Cyanursäure, hauptsächlich aber (ca. 90 %) aus Epichlordrin und Besphenol A. Je nach dem, wieviel R-Einheiten (R= -C₆H₄-C(CH₃)₂-C₆H₄-O-CH₂-CHOOH-CH₂-O-) in Mol enthalten sind, handelt es sich um flüssige (mit n=0) bis feste Produkte. Zur Analyse von Epoxydharzen können chromathographische Methoden herangezogen werden. Die Vernetzung tritt durch Reaktion der Epoxydgruppen mit Polyaminen, Anhydriden, mehrbasigen Säuren usw. ein; da es sich bei diesen Epoxydharz härtern nicht um Katalysatoren (allenfalls bei den Beschleunigern), sondern um Reaktanten handelt, ist beim Härten auf die Einhaltung der Mängelverhältnisse zu achten. Der Schwund beim Härten ist gering, die Erzeugnisse härten daher spannungsfrei, reißen nicht und besitzen hohe Schlagzähigkeit und Abriebfestigkeit. Die Epoxydharze haften gut an Werkstoffen, greifen Metalle nicht an und widerstehen atmosphärischen Einflüssen, Wasser, Säuren, Laugen, Öl, Benzin, Benzol.

Hingewiesen wird im Zusammenhang auf die DE-A 42 34 269. Sie betrifft ein Verfahren zur Herstellung von Verbundplatten, die aus einem Kern, insbesondere Kern, aus wenigstens einer der Flachseiten des Kerns aufgebrachten Glasfasergewebe oder -vlies bestehen, das in einem aushärtenden zementhaltigen Mörtel eingebettet wird und innerhalb des erstarrten Mörtels eine Armierung bildet, wobei die armierte Mörtelschicht zum Aufbringen von Verkleidungsplatten oder für andere Beschichtungsarten geeignet ist. Die bei der Herstellung der Verbundplatten durchzuführenden Verfahrensschritte, die hauptsächlich auf das spannungslose Aufbringen eines Glasfasergewebe- oder vlieses gerichtet sind, werden zur Herstellung von belegten, plattenförmigen Bauelementen verwendet. Die Anwendung des an sich bekannten Verfahrens zur Herstellung eines derartigen Bauelementes wird auch durch die bisherigen traditionellen Herstellungsverfahren für Fliesen keinesfalls nahegelegt.

Hingewiesen wird darüber hinaus darauf, daß das Gemisch aus 30 % Epoxydharz und 70 % kolorierten Harz an sich bekannt ist und zur Sanierung alter Fliesen- oder Holzböden oder Betonfußböden verwendet wird.

Die besonderen Vorteile der erfindungsgemäßen mit einer wasserabweisenden Vorsatzschicht belegten Bauelemente, insbesondere Fliesenelemente und das Verfahren zu ihrer Herstellung werden an Hand der beiliegenden Zeichnung näher erläutert.

Es zeigen:
- Fig. 1a bis 1e: unterschiedlich ausgestaltete Fliesenelemente,
- Fig. 2a bis 2e: Verfliesungen mit Fliesenelementen, insbesondere gemäß Fig. 1a bis 1e,
- Fig. 3: ein geteiltes Fliesenelement gemäß den Fig. 1a bis 1e und
- Fig. 4: eine Anlage zur Herstellung von Fliesenelementen.

Ein Fliesenelement gemäß Ausführungsbeispiel besteht aus einem Schaumstoffkern 2 als Träger-Kern-Körper, vorzugsweise einem Schaumstoffkern 2, der auf wenigstens einer Seite mit einer Quarz-Epoxydharzschicht 3 versehen ist. Anstelle eines Schaumstoffkerns kann auch ein anderes Leichtbaumaterial treten, z.B. Gipsmaterial, wie es bei Gipskartonplatten bekannt ist. Bei der Quarz-Epoxydharzschicht 3 handelt es sich vorzugsweise um eine Schicht aus "TECHNIFLOOR Quarz Color". "TECHNIFOOR Quarz Color" ist ein eingetragenes Warenzeichen.

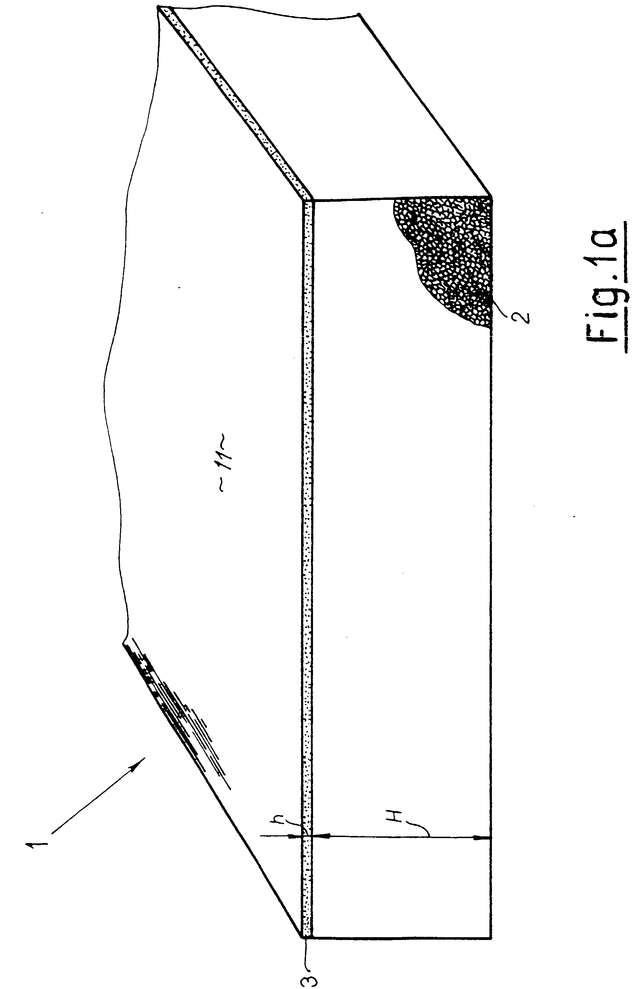

Wie Fig. 1a zeigt, ist die Quarz-Epoxydharzschicht 3 auf einer der freien Seiten des Schaumstoffkerns 2 angebracht. Dabei ist es möglich, wie Fig. 1b zeigt, daß auf dem Kern 2 ein Armierungsgewebe, z.B. ein Glasfasergewebe 7 aufgelegt ist, das teilweise in die Quarz-Epoxydharzschicht 3 eingebettet ist, so daß eine armierte Quarz-Epoxydharzschicht 9' entsteht. Als Armierungsgewebe kann darüber hinaus auch ein Metallgewebe bzw. eine Gewebe bzw. Gelege aus Glasfasern oder dergleichen verwendet werden. Ein Glasfasergewebe 7'' ist auf der gegenüberliegenden Seite in einer Mörtelschicht 8 eingebettet. Ein mit einer solchen Mörtelschicht 8 versehener Schaumstoffkern, in das das Glasfasergewebe 7'' eingebettet ist, ist als Bauplatte bekannt. Die so ausgestalteten Fliesenelemente können als Fliesen 1 verwendet werden.

Fig. 1c ist ein Fliesenwandkörper 4 als Fliesenelement gezeigt. Er besteht aus einem Schaumstoffkern 2, der beidseitig mit einer Quarz-Epoxydharzschicht 3 und 3' versehen ist, in das wie bereits beschrieben ein Glasfasergewebe 7 und 7' über dem Kern 2 liegend in die jeweilige Quarz-Epoxydharzschicht 3 bzw. 3' eingebettet ist.

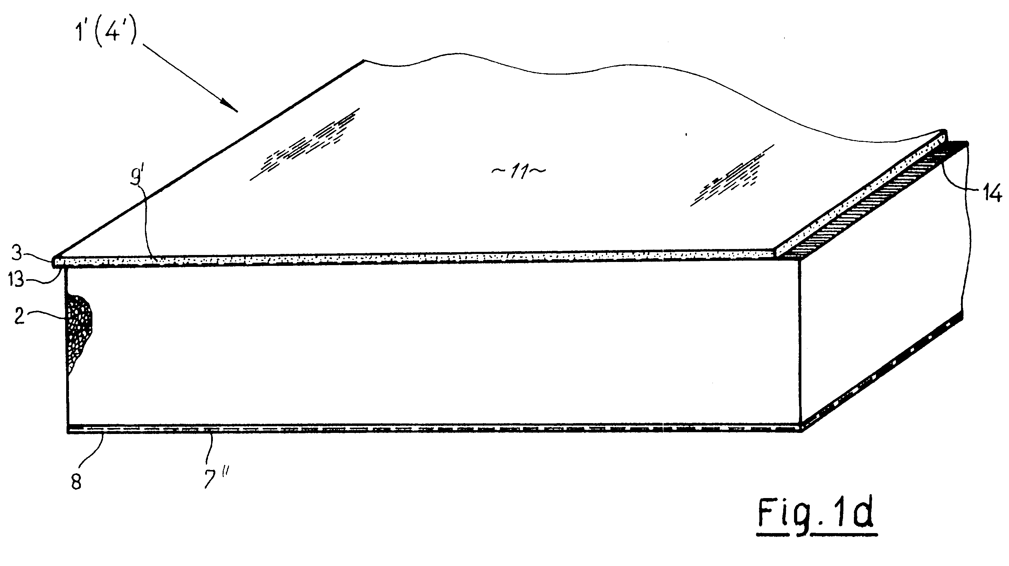

In Fig. 1d weist die Quarz-Epoxydharzschicht 3 einen Fliesenüberstand 13 und der Schaumstoffkern einen Kernüberstand 14 auf. Hierdurch entsteht eine Fliese 1' bzw. ein Fliesenwandkörper 4'.

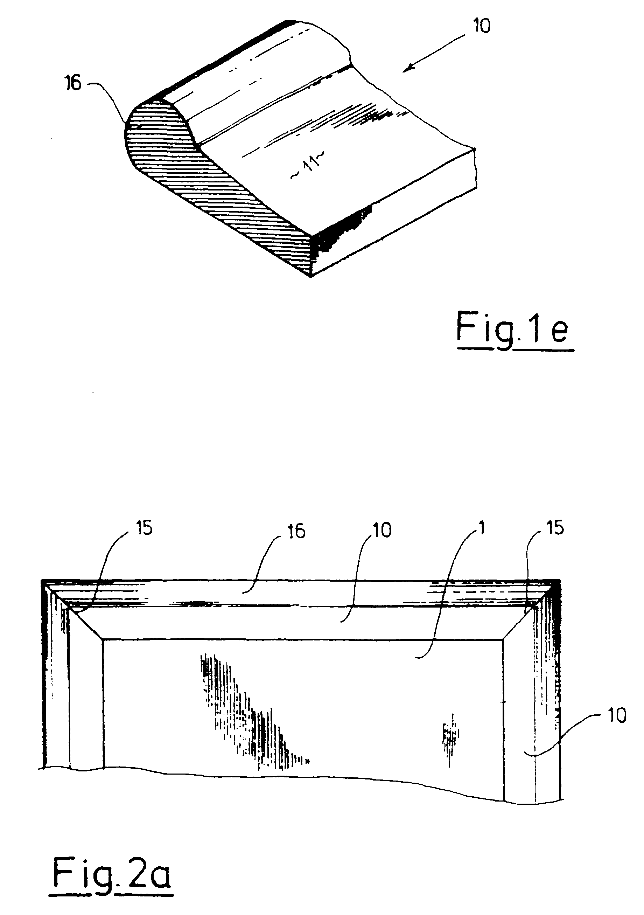

Den Fliesen 1 bzw. 1' sowie den Fliesenwandkörpern 4 bzw. 4' ist gemeinsam, daß sie eine glatte und ebene Dekorfläche 11 aufweisen. In Fig. 1e hingegen ist ein Leiste 10 gezeigt, bei der ein Schaumkörper 16 eine Wölbung 16 aufweist, die dann in einen ebenen Fliesenkörper übergeht. Hierbei ist die Dekorfläche 11 so aufgebaut, daß sie dem Relief der Leiste folgt.

Die Quarz-Epoxydharzschicht 3 bzw. 3' hat eine Höhe h, die zwischen 0,3 und 15 mm, vorzugsweise 3 mm liegt. Der dazu entsprechende Schaumstoffkern kann eine Höhe zwischen 5 bis 500 mm, vorzugsweise 180 mm haben. Die Überstände 13 und 14 sind dabei so breit gestaltet, daß sie bei einem Aneinanderlegen von Fliesen 1, 1' bzw. Fliesenwandkörpern 4 bzw. 4' einen Abstand der Quarz-Epoxydharzschichten 3, 3' frei lassen, der etwa der Breite einer üblichen Fliesenfuge besteht.

Je nach der Höhe H des Schaumstoffkerns kann das Fliesenelement als Fliese 1, 1' eingesetzt werden, die in bekannter Art und Weise verlegt wird. Das Fliesenelement kann aber auch bei Höhen von etwa 25 mm, das etwa einer normalen Wandstärke entspricht, als Fliesenwandkörper 4 bzw. 4' eingesetzt werden. Hierdurch ist es möglich, Trennwände für Bäder und dergleichen auszugestalten.

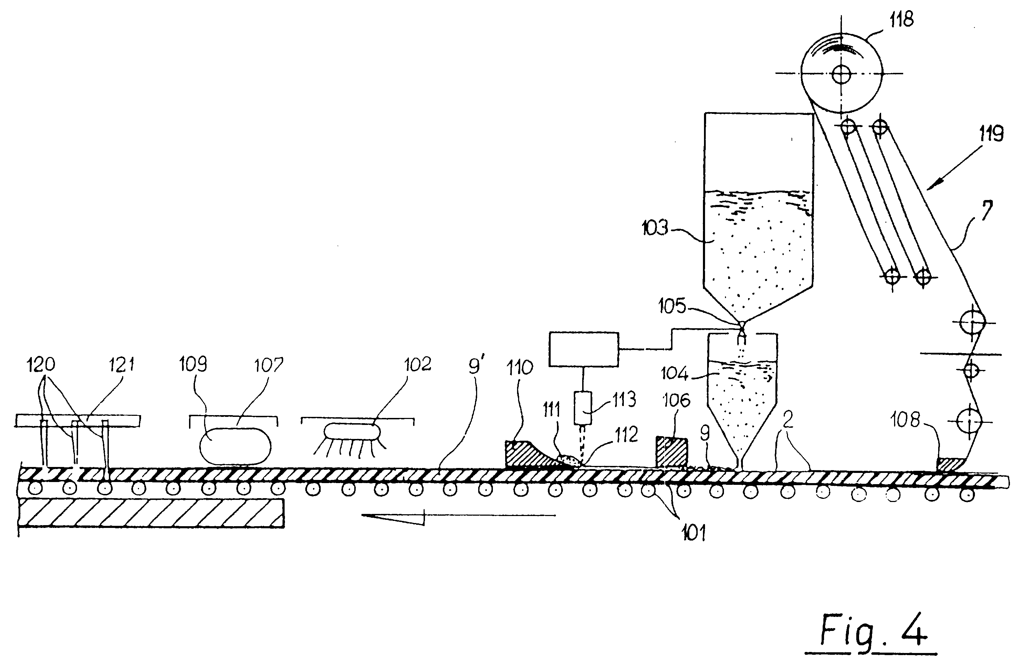

Hergestellt werden die Fliesenelemente auf einer Anlage, die in Fig. 4 gezeigt ist.

Auf einer angetriebenen Rollenbahn 101 werden horizontal liegend einzelne Bahnabschnitte aus einer aus einem Träger-Kern-Körper 2 gebildeten Bahn herangeführt. Die Bahn besteht aus einem Polystyrolschaum in der oben genannten Höhe H. Selbstverständlich sind auch andere Träger-Kern-Körper aus anderen Materialien aus organischen und/oder anorganischen Stoffen einsetzbar. Ein Silo 103 ist mit einer Aufbringvorrichtung 104 entsprechend verbunden. Zwischen dem Silo 103 und der Aufbringvorrichtung 104 ist eine Dosiervorrichtung 105, z.B. eine Düse geschaltet, die elektronisch graduiert zu steuern ist.

Die aus der Aufbringvorrichtung 104 in fluidem Zustand befindliche Mischung aus vorzugsweise 30 % Epoxydharz und 70 % koloriertem Quarz mit entsprechenden Zuschlagsstoffen wird auf die zu beschichtende Seite der Schaumstoffbahn 2 aufgebracht, und zwar in relativ grober Verteilung in drei oder mehreren Raupen. Diese Raupen werden durch einen Vergleichmäßiger 106 auf eine annähernd gleiche Schichtdicke, gegebenenfalls oberflächenstruktuiert, gebracht.

Bevor das Gemisch aufgebracht wird, oder aber auch gegebenenfalls danach, wird eine endlose Bahn 7 aus Glasfasergewebe oder -vlies in einem praktisch spannungslosen Zustand, d.h. im wesentlichen aufgrund des Eigengewichtes, und unter gleicher Geschwindigkeit wie die Transportgeschwindigkeit der Kern-Bahn herangeführt. Auf einer Vorratsrolle 118 befindet sich ein Vorrat an Glasfasergewebe-Bahn, die über einen Bahnspeicher 119 geführt wird. Die Glasfasergewebe-Bahn kann durch eine Andrückvorrichtung 108 auf den Schaumstoffkern 2 drückt werden.

Durch einen Abstreifer 110 wird das überschüssige Gemisch abgestreift und in einer solchen Schicht belassen, daß sie einer festzulegenden Höhe h entspricht. Der sich vor dem Abstreifer 110 bildende Mörtelschwall 111 bildet als vordere Begrenzung eine Lippe 112, die mit Hilfe eines opto-elektronischen oder kapazitiven Fühlers 113 abgetastet wird. Erreicht die Lippe 111 eine Stellung, die weit entfernt ist von dem Abstreifer 110, so wird das Fühlersignal vom Fühler 113 durch eine Datenverarbeitungsanlage 114 so ausgelegt, daß die Dosiervorrichtung 105 weiter geschlossen wird, so daß die zeitlich aus den Behältern 3 und 4 strömende Gemischmenge abnimmt. Reicht die Lippe 112 zurück in Richtung Abstreifer 110, so läßt die EDV-Signalverarbeitung die Dosiervorrichtung 5 sich wieder weiter öffnen und gibt wieder neue Gemischmengen aus dem Silo 103 frei.

Anschließend wird die Bahn mit dem Quarz-Harz-Gemisch 9' und dem teilweise vor allem auf den Schaumstoffkern 2 aufliegenden eingebetteten Armierungsgewebe getrocknet. Hierzu kann ein Trocknungsbereich 102 eingesetzt werden und die einzusetzenden Wärme ist dabei so auszuwählen, daß die Schicht 9' möglichst schnell, d.h. nach 0,5 - 15 Minuten, trocknet. Der Durchgang durch den Trockungsbereich 102 wird je nach dem jeweiligen Mischungsverhältnis derart eingestellt, daß innerhalb der Aushärtezeit eine Entweichung von Gasen sicher möglich ist, ohne daß sich vereinzelte kleine Löcher bilden. Danach gelangt die getrocknete Bahn in einen Schleifbereich. Hier ist eine Polier- und Schleifeinrichtung 109 eingesetzt. Sie kann dazu dienen, um die Dekorfläche 11 entsprechend hochglänzend zu polieren. Eingesetzt werden kann die Polier- und Schleifeinrichtung auch dafür, um bestimmte Strukturen und dergleichen in die Dekorfläche 11 einzuschleifen.

Abschließend wird die Bahn einem Trennbereich 121 zugeführt. Hier sind Trennmittel 120 angeordnet, die als Silikonschleifscheiben oder dergleichen ausgebildet sind. Sie teilen die Bahn in Fliesen 1, 1' bzw. Fliesenwandkörper 4.

Wird ein reliefartiger Schaumstoffkern 2 eingesetzt, der in analoger Weise beschichtet und veredelt wird, werden Leisten 10 hergestellt.

Die nach dem Schleifbereich einseitig beschichtete und oberflächenveredelte Bahn kann einseitig beschichtet verwendet werden. Dabei ist es möglich, in bekannter Art und Weise auf der freiliegenden Seite eine Mörtelschicht mit einem Glasfasergewebe einzubringen. Diese Seite kann dann entsprechen weiterverarbeitet, z.B. tapeziert, verputzt oder dergleichen werden. Soll die Bahn für die Herstellung von Fliesenwandkörpern 4, 4' verwendet werden, wird die Bahn gewendet und dazu wieder an den Anfang der Rollenbahn gebracht, daß nunmehr die unbeschichtete Bahnseite oben liegt und dieselbe Prozedur durchgeführt werden kann, die bereits beschrieben wurde.

Wesentlich ist, daß aufgrund des Einsatzstoffes für den Schaumkern sämtliche Formgebungen von Teilen möglich sind. Auf einen dementsprechend ausgebildeten und profilierten Schaumstoffkern 2 kann danach eine Quarz-Epoxydharzschicht 3 bzw. 3' aufgebracht werden, die in ihrer Stärke entsprechend festlegbar ist. Die Schichten 3 bzw. 3' erhöhen die Steifigkeit und Biegefestigkeit der Fliesen 1, 1' bzw. Fliesenwandkörper 4, 4' sehr wesentlich.

Durch die Einsatzstoffe des Träger-Kern-Körpers aus Schaumstoff oder anderen Stoffen und die Quarz-Epoxydharzschichten 3 bzw. 3', deren Zusammensetzung und Eigenschaften in der Beschreibungseinleitung ausführlich beschrieben worden sind, können mit dem beschriebenen Herstellungsverfahren industriell Fliesenelemente hergestellt werden, die im Gegensatz zu den bekannten Fliesen kein aufwendiges Brennverfahren für den Rohling und darüber hinaus ein weiteres aufwendiges Brennverfahren für den Glasierungsvorgang mit allen seinen Nachteilen notwendig machen. Durch das beschriebene Verfahren sind vielmehr Fliesenelemente herstellbar, die leichter zu bearbeiten und darüber hinaus über hervorragende statische, wärmedämmende und Verarbeitungs- und Gebrauchseigenschaften verfügen.

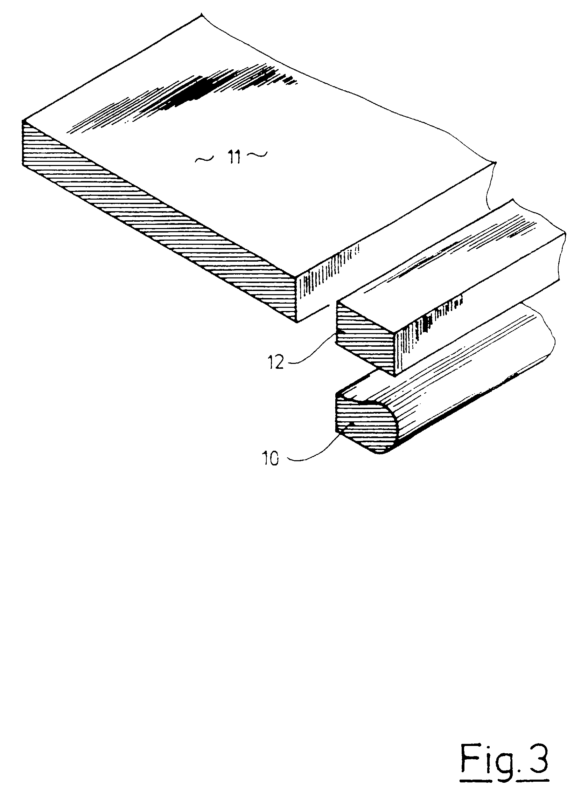

Die Verarbeitungsmöglichkeit der Fliesenelemente, wie sie sich aus den dargestellten Ausführungsbeispiel ergibt, sei an Hand der Fig. 2a bis 2e und 3 erläutert.

Von einem plattenförmig hergestellten Fliesenelement 1 bzw. 1' bzw. 4 bzw. 4' kann zum einen die Leiste 10 darüber hinaus ein beliebig breiter Fliesenabschnitt 3 getrennt werden. Dies kann durch eine einfache Bandsäge erfolgen, wie sie in der Kunststoffbearbeitung bekannt ist. Durch anschließendes Fräsen und weiteres Polieren kann der entsprechende Abschnitt 10 bzw. 12 angepaßt werden.

In Fig. 2a wird ein Fliesenelement 1 oder ein beliebiger anderer Gegenstand mit Leisten 10 umrandet. Die Leisten 10 weisen an ihren Enden Gehrungsschnitte 15 auf und besitzen zu den Außenrändern hin eine Wölbung 16. Die dazu erforderliche Bearbeitung, das Polieren und dergleichen, ist mit üblichen für die Kunstsoffbearbeitung bekannten Werkzeugen möglich. Wesentlich ist, daß die Dekorfläche 11 sowohl des Fliesenelements 1 als auch der Leiste 10 die gleiche Quarz-Epoxydharzschicht 3 zur Grundlage haben. Hierdurch wird erreicht, daß es keinerlei farbliche Unterschiede bei den einzelnen Fliesenelementen gibt. Wesentlich ist darüber hinaus, daß die Umrandung die Ausführung von Gehrungsschnitten nicht notwendig macht. Aufgrund der besonderen Verarbeitungseigenschaften der Quarz-Epoxydharzschicht ist es möglich, die Umrandung einstückig auszubilden.

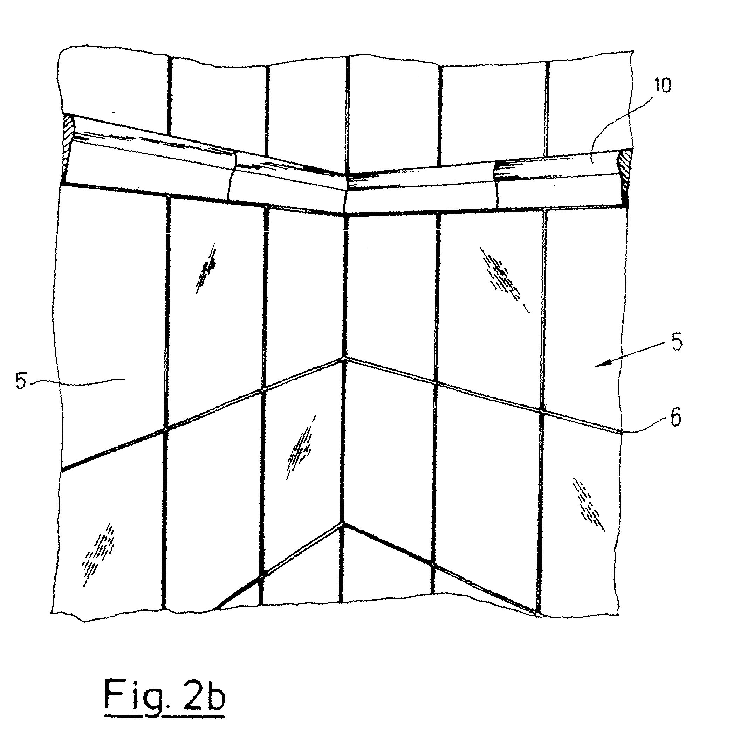

Fig. 2b zeigt die Anwendung von Fliesenelementen für das Auskleiden von Bädern und dergleichen mit einer Bordüre. Zum rationelleren Verfliesen der jeweiligen Wände sind die Fliesen 1 zu Fliesenkomplexen 5 zusammengefaßt. Sie weisen Fugen 6 auf, die bei der Oberflächenbearbeitung, d.h. beim Schleifen, in die Dekorfläche 11 eingebracht werden können. Beim Herstellen des Fliesenkomplexes 5 ist es dabei möglich, die Leiste 10 mit zu integrieren. Die Breite der Fliesenkomplexe 5 ist dabei so gewählt, daß weitere Fugen 6 eingebracht werden können, die mit einem plastischen Werkstoff in einer entsprechend angepaßten Form bzw. einer entsprechend angepaßten Kolorierung ausgeglichen werden können. Möglich ist es darüber hinaus, daß sehr großflächige Fliesenkomplexe 5 mit elastischen Fugen 6 versehen werden, die in diesem Abschnitt der Quarz-Epoxydharzschicht 3, 3', elastische Eigenschaften verleiht. Aufgrund seiner Eigenschaften ist der darunter liegende Schaumstoffkern 2 in der Lage auftretende Thermospannungen elastisch aufzufangen. Selbstverständlich ist es auch hier möglich entsprechende Dehnungsfugen einzubringen.

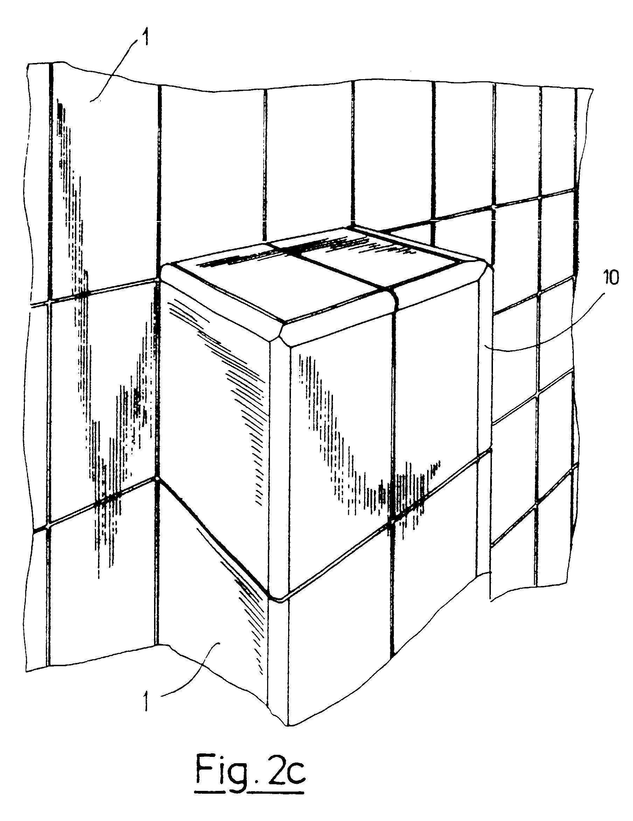

Fig. 2c zeigt die Anwendung der Fliesenelemente für eine Verfliesung eines Vorbaus. Hierbei werden die einzelnen Fliesenelemente 1 auf dem Vorbau verlegt. Die Ecken werden mit der Leiste 10 entsprechend abgedeckt. Wesentlich ist, daß bei einer Gestaltung der einzelnen Fliesenelemente gemäß Fig. 1d die Schaumstoffkerne so nebeneinander zu liegen kommen, daß sie eine durchgehende wärme- und darüber hinaus schallisolierende Schicht bilden. Durch die Länge der Überstände 13 und 14 entstehen Fugen 6, die an allen Seiten der Fliese 1 immer den gleichen Abstand haben. Ein Verdecken nicht glasierter Kanten mit Hilfe von Fugenmaterial scheidet hier aus, da die oben aufliegende Quarz-Epoxydharzschicht 3 eine solche Stärke hat, die einer Dicke sehr dünner Fliesen entspricht. Die Anpassung der Abschnitte der Leiste 10 wird an die Länge der Fliese 1 bzw. an die erforderliche Breite des zu verkleidenden Vorbaus ist aufgrund der besonderen Verarbeitungseigenschaften des Schaumstoffkerns bzw. der Quarz-Epoxydharzschicht auf sehr einfache Art und Weise möglich.

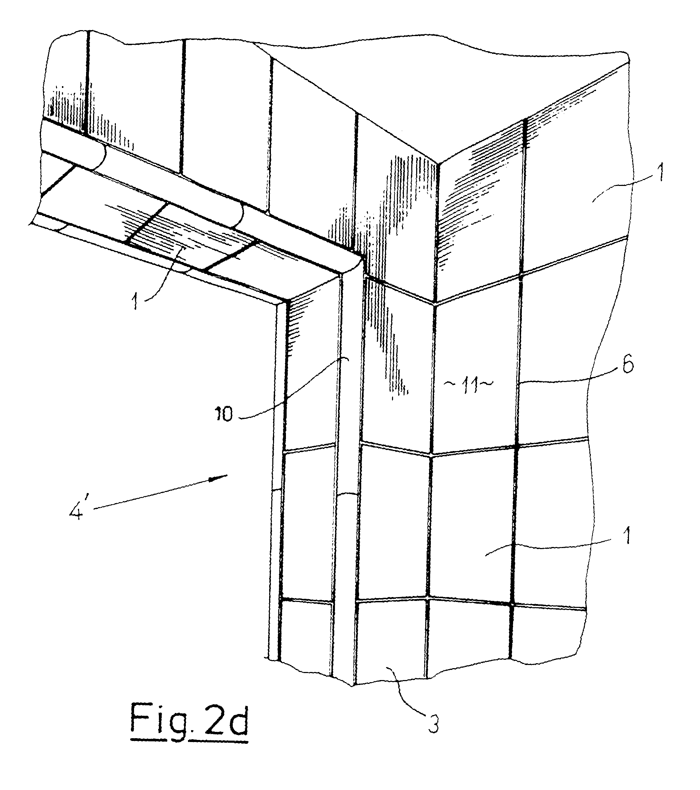

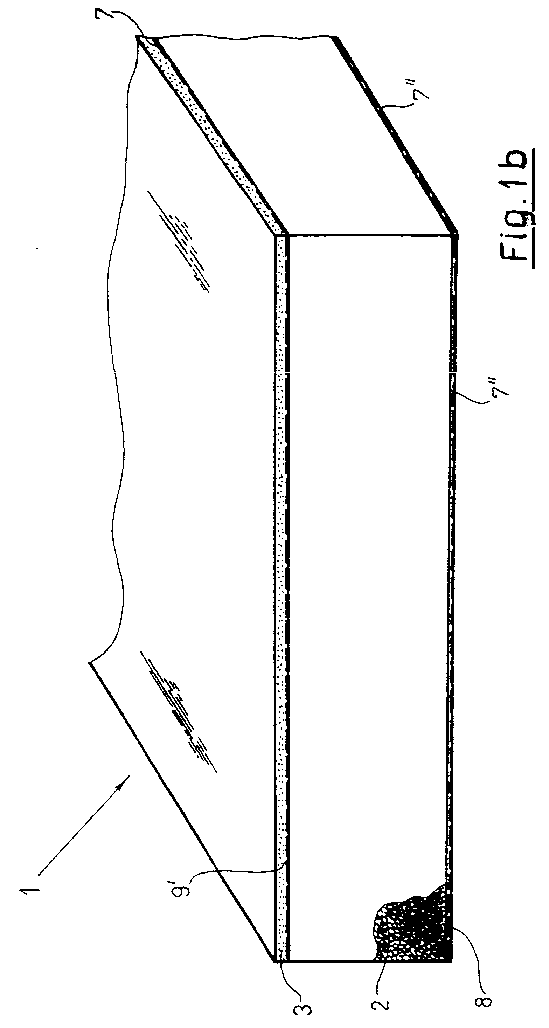

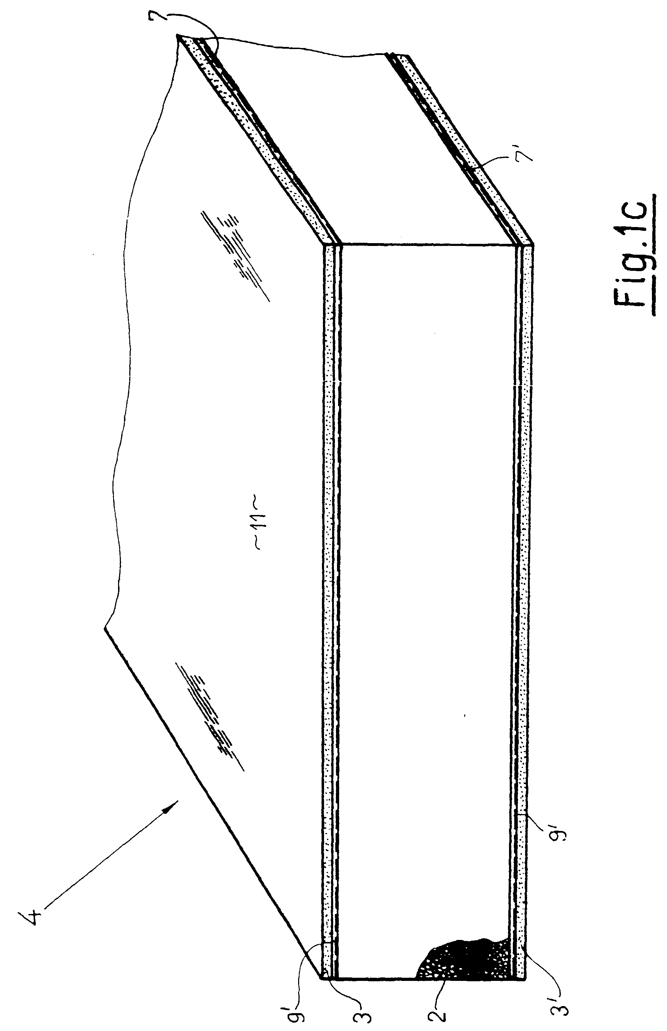

Fig. 2d zeigt die Ausgestaltung eines Wandabschnittes. Hierbei kommen Fliesenwandkörper 4' zum Einsatz. Die Dekorfläche 11 ist dabei so gestaltet, daß Fliesen 1 mit der entsprechenden Dehnungsfuge 6 nachgebildet werden. Die Höhe H kann dabei so weit gewählt werden, daß sie einen oder einen halben Stein mit den entsprechenden Fliesenbelegungen breit ist. Notwendige Durchbrechungen bzw. Außenecken einer Nische können dabei so abgedeckt werden, daß Fliesen 1 und dazugehörige Leisten 10 entsprechend angepaßt verlegt werden. Eine solche Wandkonstruktion eignet sich insbesondere beim Setzen von verfliesten Trennwänden auf Decken bzw. Deckenkonstruktionen, die über keine hohe Tragfähigkeit verfügen.

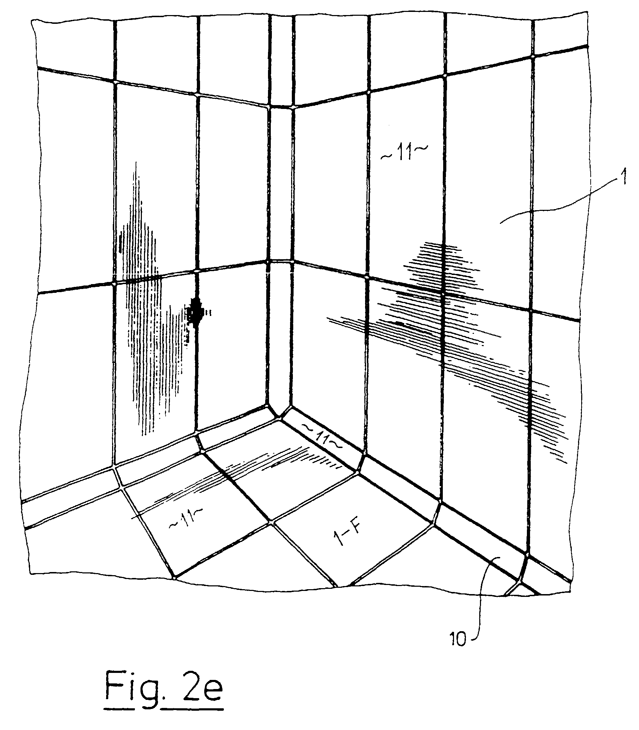

In Fig. 2e sind Teile eines zu verfliesenden Raumes dargestellt, in dem insbesondere die Innenecken mit Hilfe der Leisten 10 gestaltet sind. An den glatten durchgehenden Wänden werden Fliesen 1 verlegt. Die Innenecken werden mit Leisten 10 verkleidet. Auf dem Fußboden kann eine besonders ausgestaltete Fußbodenfliese 1-F eingesetzt werden. Die Dekorfläche 11 der Fliesen 1, der Leisten 10 und der Fußbodenfliese 1-F können dabei im gleichen Dekor gestaltet sein. Aufgrund der Farbgebungsmöglichkeiten des Quarzanteils können dabei die Fliesen 1 und die Leisten 10 sowie die Fußbodenfliese 1-F aufeinander abgestimmt farblich gestaltet werden. Da die farbliche Gestaltung mit keinem großen Aufwand verbunden ist, ist hier der Gestaltungsmöglichkeit für den Naßbereich ein breiter Raum gegeben. Um die Rutschfestigkeit der Oberfläche zu erhöhen, kann diese bei den Fußbodenfliesen 1-F entsprechend rauh ausgebildet werden.

Wesentlich ist, daß die Quarz-Epoxydharzschicht 3 bzw. 3' in allen Belangen der Oberfläche der bekannten Fliese ebenbürtig ist. Die Dekorfläche 11 weist dabei nicht nur gleiche optische, sondern auch gleiche Berührungseigenschaften auf. Wird die Dekorfläche 11 der Quarz-Epoxydharzschicht angefaßt, hat sie den gleichen kühlen und glatten Charakter wie die bekannte Fliese. Allerdings lassen sich die äußeren Kanten wesentlich besser bearbeiten, wie z.B. Schleifen, Brechen und dergleichen. Ein Abplatzen der "Glasur-Schicht" ist nicht gegeben. Sollten trotzdem einzelne Ecken aussplittern, weist das darunter liegende Material das gleiche Gefüge und das gleiche Dekor-Kolor auf. Fliesenabschlüsse können auf einfache Weise mit Hilfe der bereits beschriebenen Leiste 10 beendet werden. Sind Wandecken zu überfliesen, kann der darunter liegende Schaumstoffkern 2 oder ein Träger-Kern-Körper aus anderen Einsatzstoffen so hinterschnitten werden, daß die oben aufliegenden Quarz-Epoxydharzschichten in einem rechten Winkel zueinander liegen. Die auf der Rückseite vorhandene Mörtelschicht 8 mit dem darin eingelagerten Glasfasergewebe 7'' erlaubt es, die einzelnen Fliesen durch ein Verkleben an der Wand zu befestigen. Liegt die Mörtelschicht 8 mit dem darin eingebetteten Glasfasergewebe 7'' auf der Gegenseite eines Fliesenwandkörpers 4 frei, kann diese Schicht entsprechend verputzt, tapeziert oder dergleichen oberflächenbehandelt werden.

Zusammenfassend ist festzustellen, daß durch die erfindungsgemäßen Fliesenelemente eine Verfliesung mit wesentlich höheren Gebrauchseigenschaften als bei einer normalen Fliese erreicht wird.

Die Quarz-Epoxydschicht weist insbesondere folgende Eigenschaften auf:
- frostbeständig
- wasserdicht und wasserfest, keine Wasseraufnahme
- hohe mechanische Festigkeit
- resistent gegen Witterungseinflüsse
- chemikalienbeständig
- die brandschutztechnische Klassierung in der Schweiz beträgt 4.3
- porenfrei
- leicht zu reinigen
- kratzfest
- sehr gut geeignet für den einsatz im Lebensmittelbereich, da keine Pigmentierung an der Oberfläche.

Darüber hinaus wird die Technologie des Ausgestaltens und Gestaltens von Naßzellenbereichen in wesentlichem Maße verändert und vereinfacht. Es können Verlegungs- und Verarbeitungstechniken angewandt werden, die für das Fliesengewerbe bisher nur mit hohem Aufwand einsetzbar waren.

## Patentansprüche

1. Mit einer wasserabweisenden Vorsatzschicht belegtes Bauelement, insbesondere Fliesenelement, bei dem
- wenigstens eine Vorsatzschicht (3, 3') auf einer Sichtseite eines Träger-Kern-Körpers (2) angeordnet ist,
dadurch gekennzeichnet,
- daß der Träger-Kern-Körper als Leichtstoffkern (2) aus Kunststoffschaum oder Gipsmasse ausgebildet ist und
- daß die Vorsatzschicht eine bearbeitete Quarz-Epoxydharzschicht (3, 3') ist, die zu 10 bis 70 Gew.% aus Epoxydharz und zu 30 bis 90 Gew. % aus einem Quarz mit einer Korngröße von 0,3 bis 1,2 mm besteht,
- wobei die Summe der Epoxydharz- und Quarz-Prozentangaben 100% ergeben muß.

2. Bauelement nach Anspruch 1, dadurch gekennzeichnet, daß zwischen der Quarz-Epoxydharzschicht (3, 3') und dem Leichtstoffkern (2) ein erstes Armierungsgewebe (7, 7') angeordnet ist.

3. Bauelement nach Anspruch 1 oder 2, dadurch gekennzeichnet, daß auf der der Quarz-Epoxydharzschicht (3) gegenüberliegenden Seite des Leichtstoffkerns (2) eine ausgehärtete Mörtelschicht (8) mit einem eingebetteten zweiten Armierungsgewebe (7'') angeordnet ist.

4. Bauelement nach einem der Ansprüche 1 bis 3, dadurch gekennzeichnet, daß zwischen der Quarz-Epoxydharzschicht (3, 3') und dem Leichtstoffkern (2) eine weitere Mörtelschicht mit einem dritten eingebetteten Armierungsgewebe angeordnet ist.

5. Bauelement nach einem der Ansprüche 1 bis 4, dadurch gekennzeichnet, daß der einen Quarz-Expoxydharzschicht (3) gegenüberliegend eine weitere Quarz-Expoxydharzschicht (3') aufgebracht ist.

6. Bauelement nach einem der Ansprüche 1 bis 5, dadurch gekennzeichnet, daß der Quarz eingefärbt ist.

7. Bauelement nach einem der Ansprüche 1 bis 6, dadurch gekennzeichnet, daß das Armierungsgewebe ein Glasfasergewebe (7, 7', 7") oder ein Metallgewebe ist.

8. Bauelement nach einem der Ansprüche 1 bis 7, dadurch gekennzeichnet, daß die Quarz-Epoxydharzschicht (3,3') eine Höhe (h) von etwa 0,3 bis 15 mm hat.

9. Bauelement nach einem der Ansprüche 1 bis 8, dadurch gekennzeichnet, daß der Leichtstoffkern (2) eine Höhe (H) von 5 bis 500 mm hat.

10. Bauelement nach einem der Ansprüche 1 bis 9, dadurch gekennzeichnet, daß die Quarz-Epoxydharzschicht (3, 3') eine Dekorfläche aufweist, die eben und/oder reliefartig ausgebildet und/oder oberflächenbehandelt ist.

11. Bauelement nach einem der Ansprüche 1 bis 10, dadurch gekennzeichnet, daß in die Quarz-Epoxydharzschicht und/oder in dem Leichtstoffkern (2) Befestigungs- und/oder Hakenselemente für Handtuchhalter, Sanitäranlagen, Toilettenartikel z.B. Zahnputzbecher, Seifenschalen und dergleichen eingebracht sind.

12. Bauelement nach einem der Ansprüche 1 bis 11, dadurch gekennzeichnet, daß der Leichtstoffkern (2) flächenförmig, reliefförmig, parabelförmig, zylinderförmig, hohlkörperförmig, rohrförmig, kastenförmig, winkelförmig und/oder dergleichen ausgebildet ist.

13. Bauelement nach einem der Ansprüche 1 bis 12, dadurch gekennzeichnet, daß wenigstens eine der unbeschichteten Seitenflächen des Leichtstoffkerns (2) mit einem Metall-, Kunststoff- oder Holzschicht versehen ist.

14. Bauelement nach einem der Ansprüche 1 bis 13, dadurch gekennzeichnet, daß die Quarz-Epoxydharzschicht (3, 3') auf einer der Außenseiten mit einem Überstand (13) über dem Leichtstoffkern (2) und daß der Leichtstoffkern (2) auf der gegenüberliegenden Außenseite mit einem Kernüberstand (14) über der Quarz-Epoxydharzschicht (3, 3') übersteht.

15. Bauelement nach Anspruch 14, dadurch gekennzeichnet, daß der Überstand (13) und der Kernüberstand (14) so breit sind, daß bei einem Nebeneinanderliegen mehrerer Leichtstoffkerne (2) die Quarz-Epoxydharzschichten (3,3') einen Spalt zwischen sich frei lassen, der einer üblichen Fugenbreite entspricht.

16. Bauelement nach einem der Ansprüche 1 bis 15, dadurch gekennzeichnet, daß der Leichtstoffkern aus Polystyrolschaum, aus Foamglas oder lockerem oder geschäumten Recyclingmaterial oder holzbindenden Plattenmaterial besteht.

17. Verfahren zur Herstellung eines mit einer wasserabweisenden Vorsatzschicht belegten, plattenförmigen Bauelements, insbesondere Fliesenelement, das aus einem Leichtstoffkern (2 ) aus Kunststoffschaum oder Gipsmasse und aus auf wenigstens einer der Flachseiten des Leichtstoffkerns (2) aufgebrachten Quarz-Epoxydharzschicht (3, 3') besteht, die aus einem aushärtenden, breiartigen Gemisch aus 10 bis 70 Gew.% aus Epoxydharz und 30 bis 90 Gew.% Quarz mit einer Korngröße von 0,3 bis 1,2 mm sich ausbildet, wobei die Summe der Epoxydharz- und Quarz-Prozentangaben 100% ergeben muß, unter Verwendung folgender Verfahrensschritte:
a) Heranführen einer horizontal liegenden, aus dem Leichtstoffkern (2) gebildeten Bahn, die endlos ist, oder aus einzelnen, auf Stoß hintereinander liegenden Bahnabschnitten besteht;
b) Aufbringen des Quarz-Epoxydharzgemisches (9) in fluidem Zustand aus einer Aufbringvorrichtung (104) auf die zu beschichtende Seite des Leichtstoffkerns (2) und Verteilen des Gemisches auf der zu beschichtenden Seite des Leichtstoffkerns (2);
c) Abstreifen des über eine festgelegte Schichthöhe überstehenden Quarz-Epoxydharzgemisches mit einem Abstreifer (110) unter Bildung eines Gemischschwalls (111) vor dem Abstreifer (110);
d) Abfühlen der in dem Gemischschwall enthaltenen Gemischmenge unter Verwendung des abgefühlten Signals als Regelgröße zur Steuerung einer Dosiervorrichtung (105) für die ausströmende Gemischmenge;
e) Trocknen und Aushärten lassen der aufgebrachten Quarz-Epoxydharzschicht (3);
f) Bearbeiten, d.h. wenigstens Zerschneiden der Quarz-Epoxydharzschicht (3) und gegebenfalls auch der Leichtstoffkernbahn, im Bereich der Stöße bzw. in gewählten Abständen.

18. Verfahren nach Anspruch 17, dadurch gekennzeichnet, daß vor dem Verfahrensschritt b) eine endlose Bahn (7) eines Armierungsgewebes über einen Bahnspeicher (119) in praktisch spannungslosem Zustand und unter gleicher Geschwindigkeit wie die Transportgeschwindigkeit der Leichtstoffkernbahn aufgebracht wird, die im Verfahrensschritt f) mit zerschnitten wird.

19. Verfahren nach Anspruch 17 oder 18, dadurch gekennzeichnet, daß nach dem Trocknen und Aushärten lassen der Schicht auf der einen Flachseite die einseitig fertiggestellte Bauelementplatte gewendet wird und das Verfahren wiederholt wird für die andere, bisher unbeschichtete Flachseite.

20. Verfahren nach einem der Ansprüche 17 bis 19, dadurch gekennzeichnet, daß das Gemisch zunächst nur ungleichmäßig oder grob verteilt wird und das die Bahn (7) auf dem Bahnabschnitt aufliegen in den ungleichmäßig oder grob verteilten Mörtel eingebettet wird.

21. Verfahren nach einem der Ansprüche 17 bis 20, dadurch gekennzeichnet, daß die Dicke der ausgehärteten Quarz-Epoxydharzschicht (3, 3') bzw. der armierten Quarz-Epoxydharzschicht (9') wenigstens 0,3 mm beträgt.

## Claims

1. A structural element, particularly a tile element, covered with a water-repellent protective layer, wherein
- at least one protective layer (3, 3') is disposed on a visible side of a supporting core member (2),
characterised in that
- the supporting core member is in the form of a light-density core (2) of expanded plastic or plaster and
- the protective layer is a processed quartz-epoxy resin layer (3, 3') made up of 10 to 70% by weight of epoxy resin and 30 to 90% by weight of a quartz having a particle size of 0.3 to 1.2 mm,
- wherein the sum of the percentages of epoxy resin and quartz resin must be 100%.

2. A structural element according to claim 1, characterised in that a first reinforcing fabric (7, 7') is disposed between the quartz-epoxy resin layer (3, 3') and the light-density core (2).

3. A structural element according to claim 1 or 2, characterised in that a hardened mortar layer (8) with an embedded second reinforcing fabric (7'') is disposed on the side of the light-density core (2) remote from the quartz/epoxy resin layer (3).

4. A structural element according to any of claims 1 to 3, characterised in that an additional mortar layer with a third embedded reinforcing fabric is disposed between the quartz-epoxy resin layer (3, 3') and the light-density core (2).

5. A structural element according to any of claims 1 to 4, characterised in that an additional quartz-epoxy resin layer (3') is applied opposite the first quartz-epoxy resin layer (3).

6. A structural element according to any of claims 1 to 5, characterised in that the quartz is coloured.

7. A structural element according to any of claims 1 to 6, characterised in that the reinforcing fabric is a glass-fibre fabric (7, 7', 7'') or a metal fabric.

8. A structural element according to any of claims 1 to 7, characterised in that the quartz-epoxy resin layer (3, 3') has a height (h) of about 0.3 to 15 mm.

9. A structural element according to any of claims 1 to 8, characterised in that the light-density core (2) has a height (H) of 5 to 500 mm.

10. A structural element according to any of claims 1 to 9, characterised in that the quartz-epoxy resin layer (3, 3') has a decorative surface which is flat and/or in relief and/or is surface-treated.

11. A structural element according to any of claims 1 to 10, characterised in that fastening and/or hook elements for towels, sanitary installations, or toilet articles such as toothpaste mugs, soap dishes or the like are disposed in the quartz-epoxy resin layer and/or in the light-density core (2).

12. A structural element according to any of claims 1 to 11, characterised in that the light-density core (2) is flat, in relief, parabolic, cylindrical, hollow, tubular, box-shaped, angular and/or the like.

13. A structural element according to any of claims 1 to 12, characterised in that at least one of the uncoated sides of the light-density core (2) is covered with a metal, plastic or wood layer.

14. A structural element according to any one of claims 1 to 13, characterised in that the quartz-epoxy resin layer (3, 3') projects beyond the light-density core (2) by an amount (13) on one outer side and the light-density core (2) projects beyond the quartz-epoxy resin layer (3, 3') by an amount (14) on the opposite outer side.

15. A structural element according to claim 14, characterised in that the width of projection (13) and the extent of projection (14) of the core are such that, when a number of light-density cores (2) are disposed side by side, the quartz-epoxy resin layers (3, 3') leave a gap between them equal in width to a conventional joint.

16. A structural element according to any of claims 1 to 15, characterised in that the light-density core is of polystyrene foam, foam glass or loose or foamed recycling material or wood-binding board material.

17. A method of producing a structural element, particularly a tile element, in the form of a slab covered with a water-repellent protective layer and comprising a light-density core (2) of expanded plastic or plaster and a quartz-epoxy resin layer (3, 3') which is applied to at least one flat side of the light-density core (2) and comprises a hardenable slurry-like mixture of 10 to 70% by weight of epoxy resin and 30 to 90% by weight of quartz having a particle size of 0.3 to 1.2 mm, wherein the sum of the percentages of epoxy resin and quartz must be 100%, the steps in the process being as follows:
a) Supplying a horizontal web formed by the light-density core (2), the web being endless or comprising individual abutting portions;
b) Applying the quartz-epoxy resin mixture (9) in a fluid state from a feed device (104) to the side of the light-density core (2) for coating and distributing the mixture on the said side (2);
c) Wiping off any of the mixture of quartz-epoxy resin which projects beyond a fixed layer height, using a stripper (110) and forming a bulge (111) of mixture in front of the stripper (110);
d) Sensing the amount of mixture in the bulge, using the sensed signal as a control variable for controlling a device (105) for metering the outflowing mixture;
e) Leaving the applied quartz-epoxy resin layer (3) to dry and harden and
f) Processing, i.e. at least cutting up, the quartz-epoxy resin layer (3) and, if required, also processing the web of light-density core in the neighbourhood of the abutting regions or at chosen intervals.

18. A method according to claim 17, characterised in that before process step (b) an endless web (7) of a reinforcing fabric in a practically stress-free state is supplied via a web reservoir (119) and at the same speed as the speed of conveyance of the light-density core web, which is also cut up in step (f).

19. A method according to claim 17 or 18, characterised in that after the layer on one flat side has dried and hardened, the structural element panel, finished on one side, is turned and the process is repeated on the other, hitherto uncoated, flat side.

20. A method according to any of claims 17 to 19, characterised in that the mixture is initially distributed non-uniformly or coarsely and the web (7) resting on the web portion is embedded in the non-uniformly or coarsely distributed mortar.

21. A method according to any of claims 17 to 20, characterised in that the thickness of the hardened quartz-epoxy resin layer (3, 3') or of the reinforced quartz-epoxy resin layer (9') is at least 0.3 mm.

## Revendications

1. Elément de construction, en particulier élément de carrelage, revêtu d'une couche de parement hydrophobe, où- au moins une couche de parement (3, 3') est agencée sur un côté visible d'un corps porteur (2) constituant le noyau, caractérisé en ce que
- le corps porteur constituant le noyau est réalisé sous forme de noyau (2) de matière légère en matière plastique expansée ou en masse de gypse
et en ce que
- la couche de parement est une couche traitée de résine époxy et de quartz (3, 3') qui se compose de 10 à 70% en poids de résine époxy et de 30 à 90% en poids d'un quartz d'une granulométrie de 0,3 à 1,2 mm,
- la somme des pourcentages de résine époxy et de quartz devant s'élever à 100%.

2. Elément de construction selon la revendication 1, caractérisé en ce qu'un premier tissu d'armature (7, 7') est agencé entre la couche de résine époxy et de quartz (3, 3') et le noyau (2) en matière légère.

3. Elément de construction selon la revendication 1 ou 2, caractérisé en ce qu'une couche de mortier durcie (8), dans laquelle un deuxième tissu d'armature (7") est incorporé, est agencée sur le côté du noyau (2) en matière légère qui est opposé à la couche (3) de résine époxy et de quartz.

4. Elément de construction selon l'une quelconque des revendications 1 à 3, caractérisé en ce qu'une autre couche de mortier dans laquelle est incorporé un troisième tissu d'armature est agencée entre la couche de résine époxy et de quartz ( 3, 3') et le noyau (2) en matière légère.

5. Elément de construction selon l'une des revendications 1 à 4, caractérisé en ce qu'une autre couche de résine époxy et de quartz (3') est appliquée sur le côté opposé à la première couche de résine époxy et de quartz (3).

6. Elément de construction selon l'une quelconque des revendications 1 à 5, caractérisé en ce que le quartz est coloré.

7. Elément de construction selon l'une quelconque des revendications 1 à 6, caractérisé en ce que le tissu d'armature est un tissu de fibre de verre (7, 7', 7") ou un tissu métallique.

8. Elément de construction selon l'une quelconque des revendications 1 à 7, caractérisé en ce que la couche de résine époxy et de quartz (3, 3') est d'une hauteur (h) d'environ 0,3 à 15 mm.

9. Elément de construction selon l'une quelconque des revendications 1 à 8, caractérisé en ce que le noyau (2) en matière légère est d'une hauteur (H) de 5 à 500 mm.

10. Elément de construction selon l'une quelconque des revendications 1 à 9, caractérisé en ce que la couche de résine époxy et de quartz (3, 3') comporte une couche de décoration qui est réalisée plate ou en relief et/ou est traitée superficiellement.

11. Elément de construction selon l'une quelconque des revendications 1 à 10, caractérisé en ce que des éléments de fixation et/ou d'accrochage pour des supports d'essuie-mains, des installations sanitaires, des articles de toilette comme un verre à dent, des porte-savons et similaires, sont introduits dans la couche de résine époxy et de quartz et/ou dans le noyau (2) en matière légère.

12. Elément de construction selon l'une quelconque des revendications 1 à 11, caractérisé en ce que le noyau (2) en matière légère est réalisé selon une forme plate, une forme en relief, une forme parabolique, une forme cylindrique, une forme de corps creux, une forme tubulaire, une forme de caisson, une forme angulaire, et/ou similaire.

13. Elément de construction selon l'une quelconque des revendications 1 à 12, caractérisé en ce qu'au moins une des surfaces latérales non revêtues du noyau (2) en matière légère est pourvue d'une couche de métal, de matière plastique ou de bois.

14. Elément de construction selon l'une quelconque des revendications 1 à 3, caractérisé en ce que la couche de résine époxy et de quartz (3, 3') est en surplomb d'un certain surplomb (13) au-dessus du noyau (2) en matière légère sur l'un des côtés extérieurs et en ce que le noyau (2) en matière légère est en surplomb d'un surplomb (14) de noyau sur le côté extérieur opposé au-dessus de la couche de résine époxy et de quartz (3, 3').

15. Elément de construction selon la revendication 14, caractérisé en ce que le surplomb (13) et le surplomb (14) de noyau sont suffisamment larges pour que les couches de résine époxy et de quartz (3, 3') ménagent entre elles un intervalle qui correspond à une largeur habituelle de joint, lorsque plusieurs noyaux (2) en matière légère sont disposés côte à côte.

16. Elément de construction selon l'une quelconque des revendications 1 à 15, caractérisé en ce que le noyau en matière légère se compose de polystyrène expansé, de verre expansé, ou d'une matière de recyclage poreuse ou expansée, ou d'une matière en plaque à liant à bois.

17. Procédé de fabrication d'un élément de construction en forme de plaque, en particulier un élément de carrelage, revêtu d'une couche de parement hydrophobe qui se compose d'un noyau (2) en matière légère en mousse de matière plastique ou en masse de gypse et d'une couche de résine époxy (3, 3') et de quartz, appliquée sur au moins l'un des côtés plats du noyau (2) en matière légère, qui se compose d'un mélange pâteux durcissant de 10 à 70% en poids de résine époxy et de 30 à 90% en poids de quartz d'une granulométrie de 0,3 à 1,2 mm, la somme des pourcentages de résine époxy et de quartz devant s'élever à 100%, caractérisé en ce qu'il comprend les étapes consistant à :
a) approcher une bande disposée à plat formée d'un noyau (2) en matière légère, qui est sans fin ou se compose de parties individuelles de bandes reposant bout à bout l'une derrière l'autre ;
b) appliquer à l'état liquide, sur le côté du noyau (2) en matière légère à revêtir, le mélange (9) de résine époxy et de quartz à partir d'un dispositif d'application (104) et répartir le mélange sur le côté du noyau (2) en matière légère à revêtir ;
c) racler au moyen d'une raclette (110) le mélange de résine époxy et de quartz qui dépasse une hauteur déterminée de couche en formant devant la raclette (110) un flux (111) de mélange ;
d) détecter la quantité de mélange contenue dans le flux de mélange en utilisant le signal détecté en tant que grandeur de régulation pour commander un dispositif de dosage (105) de la quantité de mélange qui s'écoule ;
e) faire sécher et durcir la couche de résine époxy et de quartz appliquée (3) ;
f) traiter la couche (3) de résine époxy et de quartz et éventuellement aussi la bande de noyau de matière légère, c'est-à-dire au moins la découper dans la zone des abouts ou à des distances sélectionnées.

18. Procédé selon la revendication 17, caractérisé en ce que, avant l'étape b) une bande sans fin (7) d'un tissu d'armature qui sera découpée avec la bande à l'étape f) est appliquée en passant par un accumulateur (119) de bande dans un état pratiquement sans tension et à la même vitesse que la vitesse de transport de la bande de noyau de matière légère.

19. Procédé selon la revendication 17 ou 18, caractérisé en ce que la plaque d'élément de construction finie sur un premier côté plat après le séchage et le durcissement de la couche, est retournée sans dessus dessous et que le procédé est répété pour l'autre côté plat, qui n'a pas encore été revêtu.

20. Procédé selon l'une quelconque des revendications 17 à 19, caractérisé en ce que le mélange est d'abord réparti de façon non uniforme et approximative et en ce que la bande (7) sur laquelle reposent des parties de bande est incorporée dans le mortier réparti de façon non uniforme ou approximative.

21. Procédé selon l'une quelconque des revendications 17 à 20, caractérisé en ce que l'épaisseur de la couche durcie de résine époxy et de quartz (3, 3') ou de la couche armée (9') d'époxy et de quartz est d'au moins 0,3 mm.
